# EUROPÄISCHE PATENTSCHRIFT

(11) **EP 3 623 783 B1**
(45) Veröffentlichungstag und Bekanntmachung des Hinweises auf die Patenterteilung: **18.06.2025**
(21) Anmeldenummer: 19190158.6
(22) Anmeldetag: 06.08.2019
(51) Int. Cl.: G01L 1/14, G01L 5/10, F16G 1/10, F16G 1/12

(54) **RIEMEN, VORRICHTUNG UND SYSTEM**
BELT, DEVICE AND SYSTEM
COURROIE, DISPOSITIF ET SYSTÈME

(30) Priorität: 12.09.2018 DE 102018215473
(43) Veröffentlichungstag der Anmeldung: 18.03.2020
(73) Patentinhaber: ContiTech Deutschland GmbH, 30175 Hannover (DE)
(72) Erfinder: Sattler, Heiko, 30165 Hannover (DE)
(74) Vertreter: Continental Corporation

(56) Entgegenhaltungen:
- EP-A1- 2 846 064
- DE-T5- 112015 000 769
- US-A1- 2009 178 902
- US-A1- 2015 111 677
- US-B1- 6 523 400

## Beschreibung

Die Erfindung betrifft einen Riemen, eine Vorrichtung und ein System.

Riemen sind grundsätzlich aus dem Stand der Technik bekannt. Bei einem Riemen handelt es sich vorzugsweise um einen Antriebsriemen zur Übertragung von Zugkräften. Die Lebensdauer von einem Riemen wird durch die Dehnung des Riemens, insbesondere die Dehnung in einer Riemenumfangsrichtung, zumindest mitbestimmt. Eine Dehnung eines Riemens tritt zumeist wiederholt bei den zugehörigen Umläufen des Riemens auf. Dabei ist ein Riemen oftmals einer Vorspannung, Nutzkräften, Fliehkräften und/oder Biegungen ausgesetzt. Oftmals wird ein Riemen derart verwendet, dass der Riemen zumindest zwei Riemenscheiben teilweise umschlingt, sodass der Riemen umlaufend angetrieben werden kann. Die Umdrehungsrate, mit der sich der Riemen bewegt und/oder die Leistung, die zum Antrieb des Riemens notwendig ist, kann über die Belastung des Riemens Aufschluss geben. Allerdings kann aus dieser Belastung nur eine grobe Abschätzung einer tatsächlich lokal auftretenden Dehnung des Riemens erfolgen. Eine genaue Bestimmung basierend auf der zuvor genannten Belastung ist nicht möglich.

Aus dem Stand der Technik sind Dehnungsmessstreifen bekannt. Die Verwendung eines Dehnungsmessstreifens bedarf jedoch einer elektrischen Messschaltung, die mit dem Dehnungsmessstreifen zu koppeln ist, um eine von dem Dehnungsmessstreifen erfasste Dehnung auszuwerten bzw. ein entsprechendes Auswertungssignal bereitzustellen. Um einen Dehnungsmessstreifen deshalb für einen Riemen zu verwenden, bedarf es ebenfalls der zuvor genannten Auswertungsschaltung. Insbesondere wenn der Riemen während des Gebrauchs einer hohen Temperatur ausgesetzt ist, die beispielsweise durch Reibung des Riemens an einer Riemenscheibe und/oder durch eine hohe Umgebungstemperatur beeinflusst ist, ist eine entsprechend robuste Auswerteschaltung nur mit sehr hohem technischen Aufwand und entsprechenden Kosten herstellbar.

Die US 2009/178902 A1 beschreibt ein Riemenüberwachungssystem, welches einen Riemen mit mindestens einem Verstärkungselement aus einem leitfähigen Verstärkungsmaterial verwendet. Ein Gurtüberwachungsgerät ist in Verbindung mit dem Gurt angeordnet. Das Gurtüberwachungsgerät umfasst einen Feldinduktor, der durch ein angelegtes Signal angeregt wird. Eine elektrische Charakteristik von mindestens einem Teil des Feldinduktors, die durch Änderungen der elektrischen Eigenschaften des leitfähigen Verstärkungselements beeinflusst wird, wird überwacht, um einen physikalischen Zustand des leitfähigen Verstärkungselements zu bestimmen und dadurch eine physikalische Eigenschaft des Riemens zu überwachen. Diese Überwachung kann von einem Messinduktor durchgeführt werden, der neben oder in Verbindung mit dem Feldinduktor angeordnet ist.

Der Erfindung liegt deshalb die Aufgabe zugrunde, einen Riemen, eine Vorrichtung und/oder ein System bereitzustellen, mit dem bzw. mit der eine robuste Erfassung einer Dehnung eines Riemens - auch im Betrieb - gewährleistet bzw. zumindest unterstützt werden kann.

Gemäß einem ersten Aspekt der Erfindung wird die Aufgabe gelöst durch einen Riemen mit den Merkmalen des Anspruchs 1. Vorgesehen ist also ein Riemen, der ein Basismaterial, einen Festigkeitsträger und eine Antenne aufweist. Der Riemen ist in Umfangsrichtung ringförmig umlaufend ausgebildet, wobei der Festigkeitsträger als ein durchgängiger, schraubenförmig gewendelter Cord in das Basismaterial des Riemens eingebettet ist. Die Antenne ist ebenfalls in das Basismaterial eingebettet, sodass eine unmittelbare, stoffschlüssige Verbindung zwischen der gesamten Oberfläche der Antenne und dem Basismaterial besteht. Die Verbindung zwischen der Antenne und dem Basismaterial ist derart ausgebildet, dass eine Dehnung des Riemens in Umfangsrichtung zu einer Längsdehnung der Antenne führt. Die Antenne ist zur Einkopplung in ein elektromagnetisches Wechselfeld ausgebildet, so dass eine elektromagnetische Welle in der Antenne mit einer Resonanzfrequenz entsteht. Außerdem ist die Antenne derart ausgebildet, dass die Resonanzfrequenz von einer Länge der Antenne abhängt. Die Antenne ist zur Veränderung des elektromagnetischen Wechselfelds ausgebildet, sodass die Veränderung des elektromagnetischen Wechselfelds eine Längsdehnung der Antenne repräsentiert.

Die in das Basismaterial des Riemens eingebettete Antenne bietet mehrere Vorteile. So ist die Antenne durch das Basismaterial vor äußeren mechanischen Einflüssen mittels des Basismaterials geschützt angeordnet. Außerdem können auf den Riemen in Umfangsrichtung wirkende Kräfte direkt auf die Antenne mittels des Basismaterials übertragen werden, so dass eine Dehnung des Riemens zu einer entsprechenden Längsdehnung der Antenne führt. Antennen sind grundsätzlich aus dem Stand der Technik bekannt. Die Antenne kann beispielsweise eine drahtförmige Antenne und/oder eine stabförmige Antenne sein. Durch ihre Fähigkeit zur Einkopplung in das elektromagnetische Wechselfeld ist die Antenne zur Veränderung des Wechselfelds ausgebildet. Dabei hängt die Veränderung von der in der Antenne entstehenden elektromagnetischen Welle ab, die wiederum von der Länge und/oder von der Längsdehnung der Antenne abhängt. Somit ist die Antenne zur Veränderung des elektromagnetischen Wechselfelds in Abhängigkeit von der Länge und/oder Längsdehnung der Antenne ausgebildet. Daraus resultiert, dass die Veränderung des Wechselfelds die Längsdehnung der Antenne repräsentiert. Die Längsdehnung der Antenne ist vorzugsweise eine relative Dehnung der Länge der Antenne. Die Längsdehnung kann sich beispielsweise auf eine Länge der Antenne in einem vorbestimmten Ausgangszustand beziehen. Die Antenne kann auch als Funkantenne bezeichnet sein und/oder als Funkantenne ausgebildet sein. Deshalb kann die Antenne zur Einkopplung und/oder Veränderung des Wechselfelds ausgebildet sein, was vorzugsweise drahtlos und/oder per Funk erfolgt.

Der Riemen mit der in das zugehörige Basismaterial eingebetteten Antenne bietet deshalb die Möglichkeit, dass drahtlos und verzögerungsfrei auf eine Längsdehnung der Antenne und basierend hierauf auch auf eine Längsdehnung des Riemens geschlossen werden kann. Vorzugsweise entspricht die Längsdehnung der Antenne der Längsdehnung des Riemens. Zwischen den beiden Längsdehnungen kann aber auch eine lineare Abhängigkeit, insbesondere ein konstanter Faktor, bestehen. Die Längsdehnung des Riemens bezieht sich vorzugsweise auf den Abschnitt des Riemens, in dem die Antenne in das zugehörige Basismaterial eingebettet ist. Somit kann auf eine lokale Dehnung des Riemens drahtlos und/oder verzögerungsfrei geschlossen werden. Wird das Wechselfeld erfasst, kann auch die Veränderung des Wechselfelds erfasst werden. Basierend hierauf kann an mindestens einem festen Zeitpunkt und/oder kontinuierlich auf eine sich während des Betriebs ändernde Dehnung des Riemens geschlossen werden. Eine Unterbrechung des Betriebs ist dabei nicht notwendig. Darüber hinaus ist für die Antenne keine elektrische Auswertschaltung in den Riemen zu integrieren. Vielmehr kann der Riemen ausgebildet sein, besonders hohen Temperaturen robust zu wiederstehen. Dies gilt insbesondere auch für das Basismaterial und/oder die Antenne.

Das Basismaterial des Riemens kann zumindest teilweise aus Gummimaterial und/oder zumindest teilweise aus Polyurethanmaterial gebildet sein. Vorzugsweise ist das Basismaterial aus Gummimaterial oder Polyurethanmaterial. Das Basismaterial kann elektrisch isolierend ausgebildet sein. Dies bietet den Vorteil, dass die Antenne durch das Basismaterial elektrisch isoliert in den Riemen eingebettet sein kann. Die Isolierung erlaubt eine gegenüber Störgrößen robuste Veränderung des elektromagnetischen Wechselfelds zur Repräsentation der Längsdehnung der Antenne. Denn durch die elektrische Isolierung der Antenne kann verhindert werden, dass die Resonanzfrequenz der Welle in der Antenne von anderen, insbesondere elektrisch leitfähigen Elementen und/oder aktiven Bauteilen im Riemen, gestört wird. Die Antenne kann mittels des Basismaterials getrennt von anderen möglichen Bauteilen im Riemen vorzugsweise mechanisch isoliert und/oder elektrisch isoliert angeordnet und/oder ausgebildet sein. Die Isolierung kann sich somit auch auf eine mechanische Trennung von anderen Bauteilen beziehen.

Der in das Basismaterial eingebettete Cord kann beispielsweise von einem Metalldraht oder von einem band-, faser- oder drahtförmigen Filament aus Kunststoff gebildet sein. Der Cord ist in mehreren Windungen in Umfangsrichtung des Riemens in das Basismaterial eingebettet, so dass der Cord durchgängig und schraubförmig gewendelt in das Basismaterial eingebettet ist. Der Riemen ist deshalb vorzugsweise als ein Antriebsriemen, ein Treibriemen oder als ein Transmissionsriemen ausgebildet. Dabei kann der Riemen zur Übertragung von Kräften in Riemenumfangsrichtung dienen. Der Riemen ist vorzugsweise nicht als Förderband und auch vorzugsweise nicht als Fördergurt ausgebildet.

Vorzugsweise ist die Antenne in einer gestreckten Form in das Basismaterial des Riemens eingebettet. Dies gewährleistet besonders vorteilhaft, dass eine Dehnung des Riemens zu einer entsprechenden Dehnung der Antenne führt. Die gestreckte Ausgestaltung der Antenne ist jedoch nicht zwingend notwendig. So kann die Antenne auch eine andere vorteilhafte geometrische Form aufweisen. So hat es sich beispielsweise als vorteilhaft herausgestellt, wenn die Antenne gewendelt und/oder spiralförmig ausgestaltet ist und in einer entsprechenden Form in das Basismaterial eingebettet ist. Dabei weist die Antenne vorzugsweise mehrere Windungen auf. Außerdem kann die Antenne in dieser Form beispielsweise um einen Strangabschnitt des im Basismaterial ebenfalls eingebetteten Cords gewendelt eingebettet sein. Es ist aber auch möglich, dass die Antenne in einer anderen geometrischen Form in das Basismaterial eingebettet ist. So kann die Antenne beispielsweise als eine Flachbandantenne und/oder als eine folienförmige Antenne ausgebildet sein. Im letzten Fall kann beispielsweise eine Folie die Antenne bilden, die in das Basismaterial eingebettet ist. Die Folie kann dabei eine Dicke zwischen 5 Mikrometer und 0,5 mm aufweisen. Die Antenne kann sich über eine vorbestimmte Länge erstrecken. Außerdem ist es möglich, dass sich die Antenne über eine (weitere) vorbestimmte Länge in Umfangsrichtung des Riemens erstreckt. Weiterhin ist es möglich, dass sich die Antenne über eine vorbestimmte Breite des Riemens und/oder über die gesamte Breite des Riemens erstreckt. Dabei ist es jedoch bevorzugt vorgesehen, dass sich die Antenne nicht vollständig bis an die Seitenflanken des Riemens erstreckt, um zu verhindern, dass die Antenne mit äußeren Gegenständen, insbesondere Riemenscheiben, in Kontakt kommt. Eine besonders vorteilhafte und zugleich einfach herzustellende Antenne hat eine Draht- oder Stabform mit einem mittleren Durchmesser zwischen 5 Mikrometer und 0,5 mm. Diese Antenne kann in der Umfangsrichtung des Riemens in gestreckter Form in das Basismaterial des Riemens eingebettet sein.

Eine vorteilhafte Ausgestaltung des Riemens zeichnet sich dadurch aus, dass Gewebelagen in das Basismaterial eingebettet sind. Die Gewebelagen dienen vorzugsweise zur Verstärkung des Riemens, insbesondere zur Verstärkung des Querschnitts des Riemens. Die Gewebelagen oder mindestens eine Gewebelage können bzw. kann auch außen an einer Außenseite des Basismaterials angeordnet sein. Die Antenne des Riemens kann in das Gewebematerial eingewebt und/oder von dem Gewebematerial umgeben sein. Dadurch können Kräfte, die in Umfangsrichtung des Riemens auf den Riemen wirken, besonders verlässlich auch auf die Antenne übertragen werden, sodass eine Dehnung des Riemens zu einer entsprechenden Längsdehnung der Antenne führt.

Eine weitere vorteilhafte Ausgestaltung des Riemens zeichnet sich dadurch aus, dass die Antenne als eine insbesondere rein passive Antenne ausgebildet ist. Vorzugweise weist die Antenne also keine aktiven elektrischen Bauteile auf. Außerdem ist es bevorzugt vorgesehen, dass die Antenne mit keinem weiteren elektrischen Bauteil, insbesondere mit keinem weiteren aktiven, elektrischen Bauteil elektrisch verbunden ist. Vorzugsweise ist die Antenne einstückig ausgebildet. Dadurch kann die Antenne in das Basismaterial eingebettet sein und somit durch das Basismaterial von anderen Bauteilen getrennt und/oder durch das Basismaterial elektrisch isoliert sein. Die Veränderung des Wechselfelds durch die Antenne kann deshalb besonders verlässlich die Längendehnung der Antenne repräsentieren, ohne von anderen physikalischen Effekten beeinflusst zu sein.

Eine vorteilhafte Ausgestaltung des Riemens zeichnet sich dadurch aus, dass die Antenne durch einen Metalldraht ausgebildet ist. Der Metalldraht kann eine besonders biegerobuste und zugleich günstige Ausgestaltung der Antenne bilden. Vorzugsweise ist die Antenne von einem in Umfangsrichtung des Riemens gestreckten Metalldraht gebildet. Bei dem Metall des Metalldrahts kann es sich um ein ferromagnetisches Material handeln. Außerdem ist die Antenne vorzugsweise elektrisch leitfähig ausgebildet. Dies gewährleistet, dass die Antenne zur Einkopplung des elektromagnetischen Wechselfelds derart ausgebildet ist, sodass eine elektromagnetische Welle in der Antenne mit der Resonanzfrequenz entstehen kann. Der Metalldraht kann jedoch auch in einer anderen geometrischen Form in das Basismaterial eingebettet sein. So kann der die Antenne formende Metalldraht beispielsweise gewendelt, vorzugsweise um ein Cord im Riemen gewendelt ausgebildet sein. Andere vorteilhafte geometrische Ausgestaltungen des Metalldrahts zur Bildung der Antenne sind ebenfalls möglich.

Eine vorteilhafte Ausgestaltung des Riemens zeichnet sich dadurch aus, dass die Antenne als gedruckte, elektrisch leitfähige Leitung ausgebildet ist. Dabei kann die Antenne durch einen gedruckten metallischen Stab und/oder Draht gebildet sein. Es ist aber auch möglich, dass die Antenne durch eine Materialmischung aus metallischen Material und einem weiteren druckfähigen Material gebildet ist. Bei der Herstellung des Riemens kann die Antenne dabei an eine vorgesehene Stelle gedruckt werden, um daraufhin die Antenne vollständig in das Basismaterial einzubetten. Dadurch ist eine besonders einfache und zugleich präzise Einbettung der Antenne in das Basismaterial möglich.

Eine vorteilhafte Ausgestaltung des Riemens zeichnet sich dadurch aus, dass die Antenne von einem elektrisch leitfähigen Gummistrang gebildet ist. Dieser Gummistrang kann von einem anderen Material gebildet sein als das Basismaterial. Dem Gummistrang kann ferromagnetisches Material und/oder Stoff beigemischt sein. Insbesondere ist es dabei bevorzugt vorgesehen, dass das Basismaterial elektrisch isolierend ist und dass der Gummistrang elektrisch leitfähig ausgebildet ist. Es ist aber auch möglich, dass die Leitfähigkeit des elektrisch leitfähigen Gummistrangs als eine Ausgestaltung der Antenne mindestens das Zehnfache einer Leitfähigkeit des Basismaterials des Riemens ist. Dies gilt insbesondere dann, wenn das Basismaterial vollständig oder teilweise aus Gummimaterial gebildet ist. Der Gummistrang kann eine mittlere Dicke und/oder einen mittleren Durchmesser von bis zu 3 mm aufweisen. Andere Abmessungen sind jedoch auch möglich. Der als Antenne ausgebildete, elektrisch leitfähige Gummistrang ist ebenfalls in das Basismaterial eingebettet. Dies ist insbesondere dann möglich, wenn das Basismaterial vom Gummimaterial gebildet ist. In diesem Fall kann eine Verbindung zwischen der Antenne, nämlich hierbei gebildet von dem elektrisch leitfähigen Gummistrang, und dem Basismaterial, insbesondere gebildet von einem anderen Gummimaterial, derart ausgebildet sein, dass eine Dehnung des Riemens in Umfangrichtung zu einer Längsdehnung der Antenne führt. Denn der Gummistrang kann eine stoffschlüssige Verbindung zu dem Basismaterial, insbesondere wenn es aus Gummimaterial gebildet ist, aufweisen. Dies erlaubt eine besonders präzise Erfassung der Dehnung des Riemens mittels der Antenne und eine entsprechend präzise Veränderung des Wechselfelds, in Abhängigkeit der Dehnung der Antenne und/oder des Riemens.

Eine weitere vorteilhafte Ausgestaltung des Riemens zeichnet sich dadurch aus, dass die Antenne von einem elektrisch leitfähigen Polyurethanstrang gebildet ist. Die zuvor genannten, vorteilhaften Erläuterungen, bevorzugten Merkmale, Effekte und/oder Vorteile die im Zusammenhang mit dem elektrisch leitfähigen Gummistrang als eine Ausgestaltung der Antenne erörtert worden sind, gelten vorzugsweise in analoger Weise für den elektrisch leitfähigen Polyurethanstrang als eine weitere Ausgestaltung der Antenne. Ergänzend sei an dieser Stelle darauf hingewiesen, dass das Basismaterial anstatt von Gummimaterial vollständig oder teilweise von einem anderen Polyurethanmaterial gebildet sein kann. Deshalb können die entsprechenden Erläuterungen, Merkmale, Effekte und/oder Vorteile, wie sie auf Gummi bezogen erläutert worden sind, in entsprechender Weise auf Polyurethan bezogen gelten.

Eine weitere vorteilhafte Ausgestaltung des Riemens zeichnet sich dadurch aus, dass die Antenne kontaktfrei zu dem Festigkeitsträger angeordnet ist. So ist es bevorzugt vorgesehen, dass die Antenne keinen direkten Kontakt zu dem Festigkeitsträger bzw. dem gewendelten Cord und/oder der Gewebeeinlage aufweist. Vielmehr ist es bevorzugt vorgesehen, dass die Antenne derart in das Basismaterial eingebettet ist, dass die Antenne vollständig von dem Basismaterial bedeckt ist. Dies ist insbesondere dann von Vorteil, wenn das Basismaterial elektrisch isolierend ist. Denn dadurch kann ein negativer Effekt auf die Entstehung der Resonanzfrequenz in der Antenne effektiv verhindert werden. Vielmehr wird die Resonanzfrequenz sodann zumindest im Wesentlichen durch die Länge der Antenne geprägt. Indem die Antenne kontaktfrei zu dem Festigkeitsträger ausgebildet ist, wird darüber hinaus verhindert, dass die Antenne bei der Verwendung des Riemens an dem Festigkeitsträger reiben kann. Dadurch wird ein Verschleiß der Antenne und/oder des Festigkeitsträgers verhindert. Beides ist zu vermeiden. Einerseits ist nämlich zu vermeiden, dass die Form und/oder die geometrische Anordnung der Antenne durch Reibung verändert werden. Denn nur so sind verlässliche Messungen möglich. Eine Reibung der Antenne an dem Festigkeitsträger ist auch deshalb zu vermeiden, um sicherzustellen, dass der Festigkeitsträger keine reibungsbedingte Schwachstelle erhält. Vielmehr ist nämlich eine Reibung des Festigkeitsträgers möglichst zu verhindern, so dass der Festigkeitsträger die gewünschte Zugfestigkeit beibehält.

Eine weitere vorteilhafte Ausgestaltung des Riemens zeichnet sich dadurch aus, dass der Riemen frei von aktiven, elektrischen Bauteilen ausgebildet ist. Aktive elektrische Bauteile vergrößern die Komplexität des Riemens. Dies ist jedoch zu vermeiden. Denn der Riemen wird oftmals unter hohen mechanischen Belastungen und/oder unter hohen thermischen Belastungen eingesetzt. Indem der Riemen keine aktiven elektrischen Bauteile aufweist, kann gewährleistet werden, dass der Riemen besonders robust, insbesondere mechanisch besonders robust und/oder thermisch robust, ausgebildet ist. Dies hat den Effekt, dass mittels des Riemens eine besonders robuste Möglichkeit zur indirekten Erfassung von Kraftspitzen im System gegeben ist.

Gemäß einem zweiten Aspekt der Erfindung wird die eingangs genannte Aufgabe gelöst durch eine Vorrichtung mit den Merkmalen des Anspruchs 9. Vorgesehen ist also eine Vorrichtung, die einen Transmitter und eine Auswerteeinheit aufweist. Die Auswerteeinheit kann dabei mit dem Transmitter kombiniert und/oder integral ausgebildet sein. Der Transmitter kann als Transmittereinheit bezeichnet und/oder ausgebildet sein. Der Transmitter ist zum Erzeugen eines Wechselfelds ausgebildet, in das eine Antenne einkoppelbar ist, was eine elektromagnetische Welle in der Antenne mit einer Resonanzfrequenz, die von einer Länge der Antenne abhängt, und eine Veränderung des Wechselfelds derart bewirkt, dass die Veränderung des Wechselfelds eine Längsdehnung der Antenne repräsentiert. Der Transmitter ist außerdem zur Erfassung der Veränderung des Wechselfelds ausgebildet. Die Auswerteeinheit ist konfiguriert, die Längsdehnung der Antenne basierend auf der erfassten Veränderung des Wechselfelds, vorzugsweise in einem vorbestimmten Bereich um die Resonanzfrequenz, zu ermitteln. Außerdem ist die Auswerteeinheit konfiguriert, einen Längenwert, der eine Längsdehnung des Riemens repräsentiert, basierend auf der Längsdehnung der Antenne zu ermitteln.

Wie bereits erwähnt, ist es bevorzugt vorgesehen, dass der Transmitter und die Auswerteinheit als eine gemeinsame oder kombinierte Einheit ausgebildet sind, die auch als Transmitter-Auswerteeinheit bezeichnet sein kann. Diese gemeinsame oder kombinierte Einheit kann außerdem die Vorrichtung bilden oder zumindest einen Teil der Vorrichtung bilden.

Der Transmitter ist zum Erzeugen des Wechselfelds ausgebildet, wobei es sich hierbei um ein elektromagnetisches Wechselfeld handelt. Dazu kann der Transmitter beispielsweise eine elektrische Schaltung, wie eine Resonator-Schaltung, aufweisen, die zur Erzeugung des elektromagnetischen Wechselfelds ausgebildet ist. Dazu kann die Schaltung beispielsweise mindestens eine elektrische Spule aufweisen. In dieses elektromagnetische Wechselfeld kann eine Antenne, insbesondere die Antenne des Riemens gemäß dem ersten Aspekt der Erfindung, gebracht werden. So kann der Riemen beispielsweise derart angetrieben werden, dass die Antenne in das elektromagnetische Wechselfeld bewegt wird, das von dem Transmitter erzeugt wird. Auf die bevorzugten Ausgestaltungen, bevorzugten Merkmale, Effekte und/oder Vorteile, wie sie für die Antenne im Zusammenhang mit dem Riemen zuvor erläutert worden sind, wird deshalb für die Antenne eines Riemens, der bzw. die in das elektromagnetische Wechselfeld des Transmitters bewegt wird, in analoger Weise Bezug genommen. Die Antenne kann also zur Einkopplung in das elektromagnetische Wechselfeld, das von dem Transmitter erzeugbar ist, ausgebildet sein, sodass die elektromagnetische Welle in der Antenne mit der Resonanzfrequenz entsteht. Wie zuvor erläutert, hängt die Resonanzfrequenz dabei von der Länge der Antenne ab, sodass die Antenne zur Veränderung des Wechselfelds ausgebildet ist, und zwar in der Art, dass die Veränderung des Wechselfelds eine Längsdehnung der Antenne repräsentiert. Der Transmitter ist außerdem zur Erfassung der Veränderung des elektromagnetischen Wechselfelds ausgebildet, wobei die Veränderung von der Antenne bzw. der Längsdehnung der Antenne abhängt. Die von dem Transmitter erfasste Veränderung des elektromagnetischen Wechselfelds repräsentiert also die Längsdehnung der Antenne. Zur Erfassung des elektromagnetischen Wechselfelds kann der Transmitter mindestens eine entsprechende elektrische Schaltung, insbesondere mit mindestens einer Spule, aufweisen.

Außerdem ist die Auswerteeinheit konfiguriert, die Längsdehnung der Antenne zu ermitteln. Dabei wird erneut darauf hingewiesen, dass der Transmitter vorzugsweise zuvor die Veränderung des Wechselfelds erfassen kann, wobei die Veränderung des elektromagnetischen Wechselfelds die Längsdehnung der Antenne repräsentiert. Diese Informationen werden von der Auswerteeinheit also verwendet, um die Längsdehnung der Antenne basierend auf der erfassten Veränderung des Wechselfelds zu ermitteln. Die Veränderung des Wechselfelds findet vorzugsweise in einem vorbestimmten Frequenzbereich des elektromagnetischen Wechselfelds um die Resonanzfrequenz statt, die zu der elektromagnetischen Welle in der Antenne korrespondiert.

Die Auswerteeinheit ist außerdem konfiguriert, einen Längenwert, der eine Längsdehnung des Riemens repräsentiert, basierend auf der Längsdehnung der Antenne zu ermitteln. Die Längsdehnung des Riemens kann eine relative Dehnung der Länge des Riemens, und/oder eine relative Dehnung einer Länge eines Abschnitts des Riemens, in dem die Antenne angeordnet ist, sein. Die Längsdehnung des Riemens bezieht sich vorzugsweise auf die Länge des Riemens bzw. die Länge des Abschnitts des Riemens, jeweils in einem vorbestimmten Ausgangszustand.

Der Längenwert, der die Längsdehnung des Riemens repräsentiert, kann zur Überwachung des Riemens dienen. So kann der ermittelte Längenwert beispielsweise ausgewertet werden, um einen Zustand des Riemens zu ermitteln.

Der Transmitter und/oder die Vorrichtung ist bzw. sind vorzugsweise in einem vorbestimmten Abstand zu dem Riemen angeordnet, um einen Kontakt mit dem Riemen zu vermeiden. Dadurch kann ein Einfluss der Vorrichtung auf den Betrieb des Riemens auf ein Minimum reduziert sein.

Eine vorteilhafte Ausgestaltung der Vorrichtung zeichnet sich dadurch aus, dass eine Umfangslänge des Riemens von der Auswerteeinheit gespeichert ist, wobei die Auswerteeinheit dazu konfiguriert ist, einen Längsdehnungswert, der eine absolute Längenänderung des Riemens repräsentiert, basierend auf dem Längenwert und der Umfangslänge des Riemens zu ermitteln. Eine derart ermittelte, absolute Längenänderung des Riemens kann für die Verwendung des Riemens im aktiven Betrieb von Interesse sein. Insbesondere kann daraus ein Statuswert abgeleitet werden, der über einen Status des Betriebs des Riemens Auskunft gibt.

Eine weitere vorteilhafte Ausgestaltung der Vorrichtung zeichnet sich dadurch aus, dass die Auswerteeinheit konfiguriert ist, eine Restlebensdauer des Riemens basierend auf einer Historie ermittelter Längswerte und/oder Längsdehnungswerte zu ermitteln. So kann die Vorrichtung bzw. die zugehörige Auswerteeinheit ausgebildet sein, zeitlich hintereinander mehrere Längswerte und/oder Längsdehnungswerte zu ermitteln. Die Ermittlung kann dabei in festen Abständen erfolgen. Es ist jedoch auch möglich, dass die Ermittlung getriggert durch die Erfassung der Veränderung des Wechselfelds erfolgt. Die erfassten Längsdehnungswerte und/oder Längswerte können von der Auswerteeinheit gespeichert sein. Basierend auf diesen ermittelten Längswerten und/oder Längsdehnungswerten kann die Auswerteeinheit deshalb dazu konfiguriert sein, eine Restlebensdauer des Riemens zu ermitteln. Eine entsprechend ermittelte Restlebensdauer kann dazu dienen, die Wartungsintervalle und/oder den Austausch des Riemens vorausschauend zu planen.

Gemäß einem dritten Aspekt wird die eingangs genannte Aufgabe gelöst durch ein System mit den Merkmalen des Anspruchs 12. Vorgesehen ist also ein System, das einen Riemen und eine Vorrichtung aufweist. Bei dem Riemen handelt es sich vorzugsweise um einen Riemen gemäß dem ersten Aspekt der Erfindung und/oder einer der zugehörigen, vorteilhaften Ausgestaltungen. Bezüglich des Riemens wird auf die Erläuterungen vorteilhafter, bevorzugter Merkmale, Vorteile und/oder Effekte, wie sie für den Riemen bereits erläutert worden sind, zumindest in analoger Weise Bezug genommen. Bei der Vorrichtung des Systems handelt es sich vorzugsweise um die Vorrichtung gemäß dem zweiten Aspekt der Erfindung und/oder einer der zugehörigen, vorteilhaften Ausgestaltungen. Bezüglich der Vorrichtung wird auf die Erläuterungen vorteilhafter, bevorzugter Merkmale, Effekte und/oder Vorteile, wie sie im Zusammenhang mit der bereits erläuterten Vorrichtung erörtert worden sind, zumindest in analoger Weise und bevorzugt Bezug genommen.

Bei der Antenne, die in das von dem Transmitter der Vorrichtung erzeugbare Wechselfeld einkoppelbar ist, handelt es sich um die Antenne des Riemens.

Eine vorteilhafte Ausgestaltung des Systems zeichnet sich dadurch aus, dass das System mindestens zwei Riemenscheiben aufweist, wobei der Riemen die Riemenscheiben zumindest teilweise umschlingt, wobei eine Länge der Antenne des Riemens kleiner als die kleinste Trumlänge, insbesondere des mindestens einen Zugtrums, des Riemens ist. Die Länge der Antenne kann also kleiner als die kleinste Trumlänge des mindestens einen Zugtrums des Riemens sein. Mit anderen Worten kann es vorgesehen sein, dass die Länge der Antenne kleiner als die kleinste Trumlänge eines Zugtrums des Riemens ist. Dadurch kann besonders einfach gewährleistet werden, dass die Antenne beim Umlauf des Riemens um die Riemenscheiben zumindest für einen Zeitpunkt und/oder einen vorbestimmten Zeitabschnitt vollständig in dem Zugtrum des Riemens zwischen zwei Riemenscheiben angeordnet ist. Darüber hinaus kann der Transmitter derart angeordnet sein, sodass das elektromagnetische Wechselfeld den Bereich zwischen den Riemenscheiben durchdringt, in dem das Zugtrum angeordnet ist. Dies gewährleistet, dass die Antenne in das elektromagnetische Wechselfeld einkoppelbar ist, wenn die Antenne in dem Zugtrum angeordnet ist. Dies bietet wiederum die Möglichkeit, dass die in dem Zugtrum wirkende Belastung mittels der Antenne erfassbar ist. Denn die Antenne unterliegt einer Längsdehnung, hervorgerufen durch die Dehnung des Riemens. Der Riemen unterliegt in dem Zugtrum für gewöhnlich der größten Dehnung. Dies entspricht auch der oftmals größten Belastung des Riemens. Wird die Antenne also im Zugtrum in das von dem Transmitter erzeugte Wechselfeld eingekoppelt, so kann der Transmitter darüber hinaus die Veränderung des Wechselfelds, hervorgerufen durch die Antenne, erfassen, wobei das veränderte Wechselfeld die Längsdehnung der Antenne repräsentiert. Die Auswerteeinheit der Vorrichtung des Systems kann diese Information verwenden, um die Längsdehnung der Antenne zu ermitteln und/oder um die Längsdehnung des Riemens zu ermitteln. Darüber hinaus kann die Auswerteeinheit dazu konfiguriert sein, den Längsdehnungswert, der eine absolute Längenänderung des Riemens repräsentiert, basierend auf der Längsdehnung des Riemens und einer Umfangslänge des Riemens zu ermitteln.

Eine weitere vorteilhafte Ausgestaltung des Riemens zeichnet sich dadurch aus, dass die Antennenlänge maximal 90 %, 80 %, 70 %, 60 % oder 50 % der Trumlänge beträgt. Hierbei handelt es sich vorzugsweise um die kleinste Trumlänge, insbesondere die kleinste Trumlänge eines Zugtrums des Riemens. Dadurch, dass die Antennenlänge, also die Länge der Antenne in Umfangsrichtung, kleiner als die zuvor genannte, bevorzugte Trumlänge ist, kann besonders einfach gewährleistet werden, dass die Dehnung des Riemens in dem entsprechenden Trum zu einer entsprechenden gleichen Längsdehnung der Antenne führt. Dies erlaubt eine verlässliche Erfassung der Längsdehnung der Antenne bzw. der Längsdehnung des Riemens.

Eine vorteilhafte Ausgestaltung des Systems zeichnet sich dadurch aus, dass der Transmitter, insbesondere als Teil einer kombinierten Transmitter-Auswerteeinheit, und/oder die gesamte Vorrichtung in einem vorbestimmten Abstand zwischen 1 mm und 50 cm zu einem Trum des Riemens angeordnet ist. Hierbei handelt es sich vorzugsweise um ein Zugtrum des Riemens. Durch den vorbestimmten Abstand kann gewährleistet werden, dass der Transmitter keinen direkten mechanischen Kontakt zu dem Riemen aufweist. Der Transmitter hat also keinen mechanischen negativen Einfluss auf den Riemen. Dabei wird der Betrieb des Riemens als solcher durch den Transmitter bzw. die Vorrichtung nicht negativ beeinflusst. Vielmehr kann die Längsdehnung der Antenne und/oder die Längsdehnung des Riemens im laufenden Betrieb ohne negativen Einfluss auf das System bzw. auf den Riemen erfasst und/oder ermittelt werden.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine vorteilhafte Ausgestaltung des Systems mit einer vorteilhaften Ausgestaltung des Riemens sowie eine vorteilhafte Ausgestaltung der Vorrichtung jeweils in einer schematischen Ansicht.
- Figur 2: zeigt einen Abschnitt einer vorteilhaften Ausgestaltung des Riemens in einer schematischen Ansicht.
- Figur 3: zeigt einen Abschnitt einer weiteren vorteilhaften Ausgestaltung des Riemens in einer schematischen Ansicht.
- Figur 4: zeigt einen Abschnitt des als Cord vorteilhaft ausgestalteten Festigkeitsträgers, wobei zumindest ein Teil der Antennen um den Cord gewendelt ist.

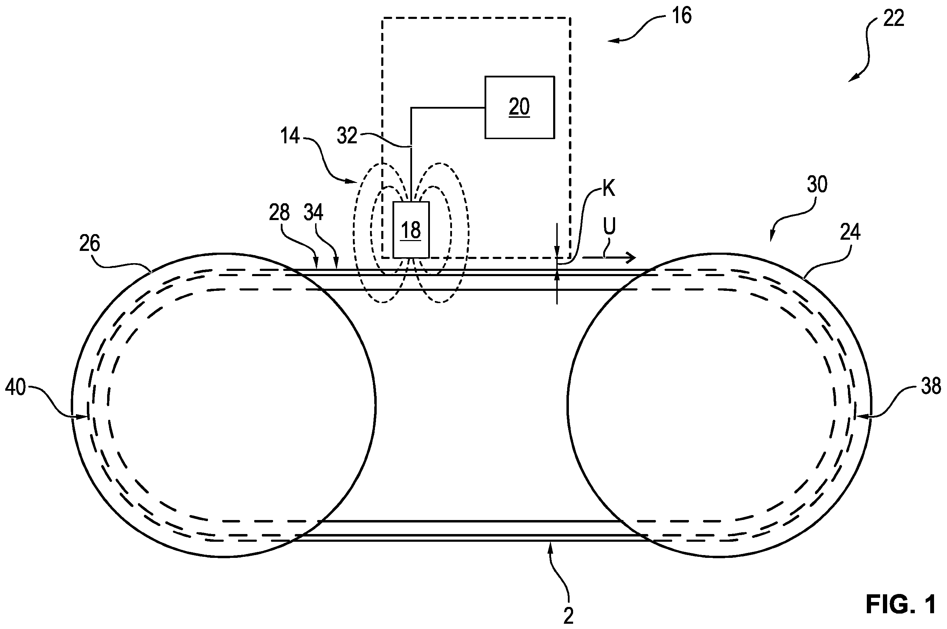

In der Figur 1 ist eine vorteilhafte Ausgestaltung des Riemens 2 schematisch dargestellt. Außerdem ist in der Figur 1 die Vorrichtung 16 sowie das System 22 in einer jeweils vorteilhaften Ausgestaltung schematisch dargestellt.

Obwohl der in Figur 1 schematisch dargestellte Riemen 2 ein Teil eines Riementriebs 30 bildet, kann der Riemen 2 einen separaten Aspekt der Erfindung betreffen. Einen weiteren Aspekt der Erfindung kann die Vorrichtung 16 bilden. Darüber hinaus kann ein Aspekt der Erfindung das System 22 betreffen, dass die Vorrichtung 16 sowie den Riemen 2 umfasst. Im Weiteren soll zunächst auf den Riemen 2 eingegangen werden.

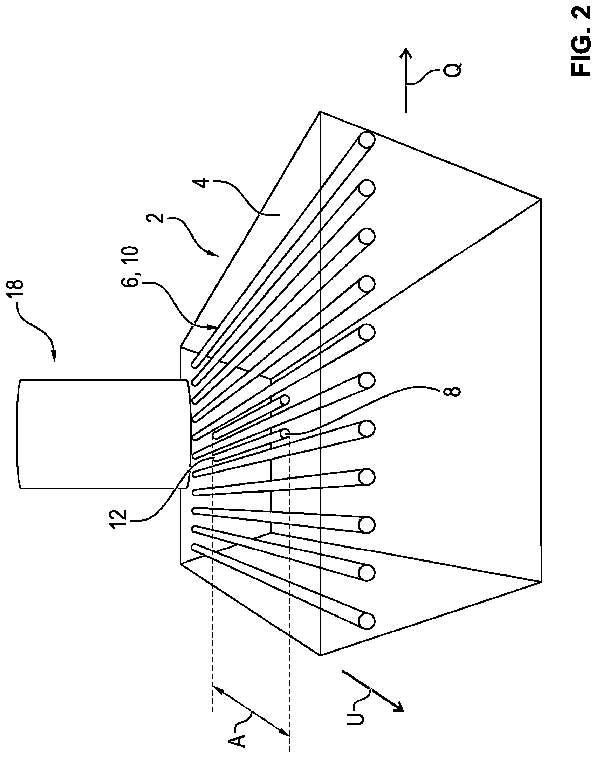

Eine vorteilhafte Ausgestaltung des Riemens 2 ist in der Figur 2 schematisch anhand eines Abschnitts des Riemens 2 halbtransparent dargestellt. Der Riemen 2 weist ein Basismaterial 4 auf, das beispielsweise aus Gummimaterial oder Polyurethanmaterial besteht. Außerdem weist der Riemen 2 einen Festigkeitsträger 6 auf. Der Festigkeitsträger 6 ist als ein drahtförmiger, schraubenförmig gewendelter Cord 10 in das Basismaterial 4 des Riemens 2 eingebettet. Der Festigkeitsträger 6 bzw. der Cord 10 ist also vorzugsweise in Umfangsrichtung U des Riemens 2 mehrfach gewendelt und somit schraubenförmig in das Basismaterial 4 eingebettet. Die einzelnen Windungen des Cords 10 können durch das Basismaterial 4 des Riemens 2 getrennt sein. Bei dem Cord 10 handelt es sich vorzugsweise um einen durchgehenden, also ununterbrochenen Cord 10. Der Cord 10 kann zum Beispiel ein Drahtseil sein oder von einem aus Kunststofffasern bestehenden Seil gebildet sein. Grundsätzlich kann der Riemen 2 mehrere Festigkeitsträger 6 aufweisen. Rein beispielhaft wird jedoch davon ausgegangen, dass der Riemen 2 nur einen Festigkeitsträger 6 aufweist, der in das Basismaterial 4 des Riemens 2 eingebettet ist. Der Riemen 2 ist in Umfangsrichtung U ringförmig umlaufend ausgebildet. Entsprechendes kann deshalb für die Windungen des Festigkeitsträgers 6 gelten.

Außerdem weist der Riemen 2 eine Antenne 8 auf. Die Antenne 8 ist in das Basismaterial 4 des Riemens 2 eingebettet. Die Antenne 8 ist vorzugsweise als eine rein passive Antenne 8 ausgebildet. Sie ist also nicht mit weiteren elektronischen Bauteilen gekoppelt. Vielmehr ist es bevorzugt vorgesehen, dass die Antenne 8 vollständig von dem Basismaterial 4 des Riemens 2 umhüllt und eingebettet ist. Dadurch kann gewährleistet werden, dass die Antenne 8 kontaktfrei zu dem Festigkeitsträger 6 des Riemens 2 angeordnet ist. Dies bietet wiederum den Vorteil, dass die Antenne 8 auch bei einer Belastung des Riemens 2 kein Reibeffekt an dem Festigkeitsträger 6 hervorruft. Somit wird besonders effektiv gewährleistet, dass keine Reibung und/oder kein Verschleiß der Antenne 8 und/oder an einer der Windungen des Festigkeitsträgers 6 beim Betrieb des Riemens 2 hervorrufen wird. Der Riemen 2 ist deshalb besonders robust.

Eine vorteilhafte Ausgestaltung des Riemens 2 zeichnet sich dadurch aus, dass die Antenne 8 in Umfangsrichtung U des Riemens 2 gestreckt in das Basismaterial 4 eingebettet ist. Außerdem ist die Antenne 8 derart in das Basismaterial 4 eingebettet, sodass eine unmittelbare stoffschlüssige Verbindung zwischen der gesamten Oberfläche 12 der Antenne 8 und dem Basismaterial 4 besteht. Die Verbindung zwischen der Antenne 8 und dem Basismaterial 4 ist deshalb derart ausgebildet, dass eine Dehnung des Riemens 2 in Umfangsrichtung U zu einer Längsdehnung der Antenne 8 führt. Dies gilt insbesondere dann, wenn die Dehnung in einem Teil des Riemens 2 in Umfangsrichtung U auftritt, in dem die Antenne 8 angeordnet ist. Unterliegt beispielsweise der in Figur 2 dargestellte Abschnitt des Riemens 2 einer Dehnung, so führt dies zu einer entsprechenden Längsdehnung der Antenne 8.

Die in Figur 1 beispielhaft dargestellte Ausgestaltung der Vorrichtung 16 kann einen Transmitter 18 aufweisen. Der Transmitter 18 ist vorzugsweise zum Erzeugen eines elektromagnetischen Wechselfelds 14 ausgebildet. Dabei kann der Transmitter 18 zu einem Trum 28 des Riemens 2 beabstandet derart angeordnet sein, so dass das von dem Transmitter 18 erzeugbare, elektromagnetische Wechselfeld 14 das Trum 28 des Riemens 2 durchdringt.

Der Riemen 2 zeichnet sich dadurch aus, dass die in das Basismaterial 4 eingebettete Antenne 8 zur Einkopplung in das elektromagnetische Wechselfeld ausgebildet ist, sodass eine elektromagnetische Welle in der Antenne 8 mit einer Resonanzfrequenz entsteht. Dabei ist die Antenne 8 derart ausgebildet, dass die Resonanzfrequenz von einer Länge A der Antenne 8 abhängt. Wird die Antenne 8 in Umfangsrichtung U gestreckt, so kann dies zu einer Vergrößerung der Resonanzfrequenz führen.

Die Antenne 8 des Riemens 2 ist außerdem zur Veränderung des elektromagnetischen Wechselfelds 14 ausgebildet. Denn durch die Einkopplung der Antenne 8 in das elektromagnetische Wechselfeld 14 findet eine Rückwirkung von der Antenne 8 auf das elektromagnetische Wechselfeld 14 statt, wobei die Rückwirkung abhängig von der Resonanzfrequenz der in der Antenne 8 entstehenden elektromagnetischen Welle ist. Die Resonanzfrequenz wiederum ist abhängig von der Länge A der Antenne 8. Daraus ergibt sich eine Abhängigkeit der Veränderung des Wechselfelds 14 durch die Antenne 8 in Abhängigkeit der Länge A der Antenne 8 bzw. einer Längsdehnung der Antenne 8. Deshalb ist die Antenne 8 zur Veränderung des elektromagnetischen Wechselfelds 14 derart ausgebildet, sodass die Veränderung des elektromagnetischen Wechselfelds 14 eine Längsdehnung der Antenne 8 repräsentiert.

Durch die Dehnung der Antenne 8 in Umfangsrichtung U kann sich beispielsweise die Resonanzfrequenz der in der Antenne 8 entstehenden elektromagnetischen Welle vergrößern, was wiederum eine Rückwirkung auf das Frequenzspektrum des elektromagnetischen Wechselfelds 14 hat. Das Frequenzspektrum kann somit einer Verschiebung entsprechend der Veränderung der Resonanzfrequenz unterliegen. Diese Veränderung im Frequenzspektrum des elektromagnetischen Wechselfelds 14 ist deshalb repräsentativ für die Längendehnung der Antenne 8.

Der in Figur 1 beispielhaft dargestellte Transmitter 18 kann außerdem zur Erfassung des elektromagnetischen Wechselfelds 14, insbesondere zur Erfassung der Veränderung des elektromagnetischen Wechselfelds 14, ausgebildet sein. Außerdem ist es bevorzugt vorgesehen, dass die Auswertevorrichtung 20 der Vorrichtung 16 mit dem Transmitter 18 gekoppelt ist und/oder dass die Auswerteeinheit 20 und der Transmitter 18 eine kombinierte und/oder gemeinsame Einheit bilden. Darüber hinaus ist die Auswerteeinheit 20 bevorzugt derart konfiguriert, um die Längsdehnung der Antenne 8 basierend auf der erfassten Veränderung des elektromagnetischen Wechselfelds 14 zu ermitteln. Dadurch kann mittels der Vorrichtung 16 kontaktlos auf eine Dehnung eines Riemens 2 geschlossen werden, ohne den Betrieb eines Riementriebs 30 mit dem erfindungsgemäßen Riemen 2 zu unterbrechen.

Wie bereits zuvor angemerkt, betrifft ein weiterer Aspekt der Erfindung die Vorrichtung 16. Diese ist durch die gestrichelte Linie in Figur 1 schematisch dargestellt. Die Vorrichtung 16 weist den Transmitter 18 und die Auswerteeinheit 20 auf. Die beiden Einheiten 18, 20 können integral oder getrennt ausgebildet sein. Sofern der Transmitter 18 und die Auswerteeinheit 20 getrennt ausgebildet sind, können die beiden Einheiten 18, 20 durch eine Signalverbindung 32 miteinander gekoppelt sein, um ein von dem Transmitter 18 bereitgestelltes Erfassungssignal, das die Veränderung des Wechselfelds 14 repräsentiert, an die Auswerteeinheit 20 zu übertragen.

Ein weiterer Aspekt der Erfindung betrifft das System 22, das den Riemen 2 sowie die Vorrichtung 16 umfasst. Dabei ist die Vorrichtung 16 vorzugsweise in einem vorbestimmten Abstand K, der vorzugsweise kleiner als 50 cm, kleiner als 20 cm oder kleiner als 10 cm ist, zu einem Trum 28 des Riemens 2 angeordnet, insbesondere dann, wenn der Riemen 2 zwei Riemenscheiben 24, 26 eines Riementriebs 30 zumindest teilweise umschlingt. Das System 22 kann deshalb auch den Riementrieb 30 mit den beiden Riemenscheiben 24, 26 aufweisen.

Im Betrieb des Riementriebs 30 wird der Riemen 2 derart angetrieben, dass der Riemen 2 umlaufend bewegt und von den beiden Riemenscheiben 24, 26 entsprechend umgelenkt wird. Bei einer konstanten Geschwindigkeit des Riemens 2 in Umfangsrichtung U passiert die in das Basismaterial 4 eingebettete Antenne 8 des Riemens 2 in periodischen Abständen den Transmitter 18 der Vorrichtung 16. Dabei ist die Antenne 8 jeweils dem elektromagnetischen Wechselfeld 14 ausgesetzt, das von dem Transmitter 18 erzeugt wird. Der Transmitter 18 ist dabei auch zur Erfassung der Veränderung des elektromagnetischen Wechselfelds 14 ausgebildet. Diese Veränderung des elektromagnetischen Wechselfelds 14 wird von der Auswerteeinheit 20 ausgewertet, um eine Längsdehnung der Antenne 8 zu ermitteln. Darüber hinaus kann diese Längsdehnung der Antenne 8 von der Auswerteeinheit 20 derart verwendet werden, um eine Längsdehnung des Riemens 2 zu ermitteln. Diese Längsdehnung des Riemens 2 bezieht sich dabei vorzugsweise auf den Abschnitt des Riemens 2, in dem die Antenne 8 angeordnet ist.

Es ist von Vorteil, wenn die Vorrichtung 16 gegenüberliegend zu einem Zugtrum 34 des Riemens 2 eines Riementriebs 30 angeordnet ist. Denn das Zugtrum 34 des Riemens 2 eines Riementriebs 30 unterliegt zumeist der höchsten in Umfangsrichtung U wirkenden Zugkraft, was zu der größten Dehnung des Riemens 2 im Betrieb führt. In dem die Vorrichtung 16 und/oder vorzugsweise der zugehörige Transmitter 18 gegenüberliegend, vorzugsweise im vorbestimmten Abstand K, zu dem Zugtrum 34 des Riemens 2 angeordnet ist, kann eine für den Zustand des Riemens 2 besonders relevante Größe, nämlich die Längsdehnung der Antenne 8 und/oder die Längsdehnung des Riemens 2, ermittelt werden.

Um die Erfassung der zuvor genannten Größen möglichst robust gegenüber äußeren Einflüssen vorzunehmen, hat es sich als vorteilhaft erwiesen, wenn die Länge A der Antenne 8 kleiner als die kleinste Trumlänge des Zugtrums 34 des Riemens 2 ist. Denn in diesem Fall durchläuft die Antenne 8 zumindest zu einem Zeitpunkt beim Umlauf des Riemens 2 den Zugtrum 34 in der Weise, dass die Antenne 8 nicht in einem Umschlingungsbereich 38, 40 einer der beiden Riemenscheiben 24, 26 ist. In diesem Fall kann eine besonders große Veränderung des Wechselfelds 14 mittels des Transmitters 18 erfasst werden, was repräsentativ für die maximale Belastung bzw. Dehnung des Riemens 2 ist.

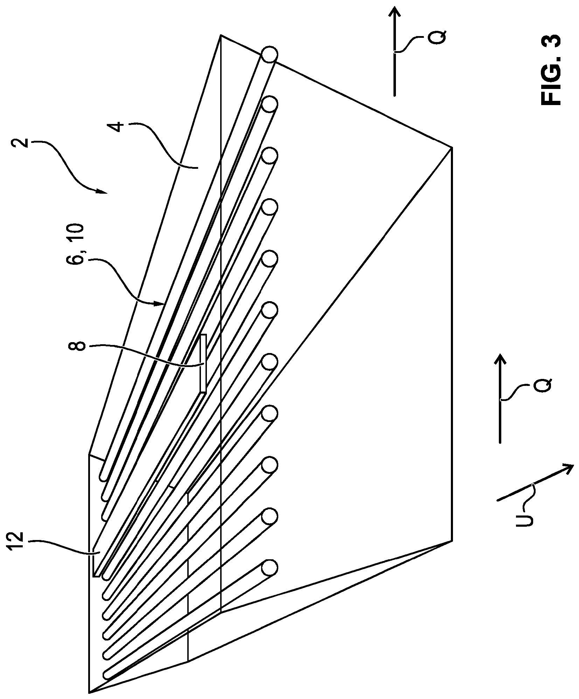

Eine weitere vorteilhafte Ausgestaltung eines Riemens 2 ist schematisch und anhand eines Abschnitts des Riemens 2 in der Figur 3 dargestellt. Hierbei ist die Antenne 8 von einem plattenförmigen oder folienförmigen Körper, insbesondere aus Metall, gebildet. Die Antenne 8 ist dabei nicht zwischen den Festigkeitsträgern 6 angeordnet. Vielmehr ist es bevorzugt vorgesehen, dass die Antenne 8 oberhalb oder unterhalb der Festigkeitsträger 6 in das Basismaterial 4 des Riemens 2 eingebettet ist. Außerdem kann es hierbei für die Antenne 8 vorgesehen sein, dass die Antenne 8 in Umfangsrichtung U gestreckt ausgebildet ist.

Die in Umfangsrichtung U gestreckte Ausgestaltung der Antenne 8 bedeutet jedoch nicht, dass die Antenne 8 nicht auch in Querrichtung Q des Riemens erstreckt und ausgebildet sein kann. Grundsätzlich ist es möglich, dass die Antenne 8 auch in Querrichtung Q über die gesamte Breite erstreckend ausgebildet ist.

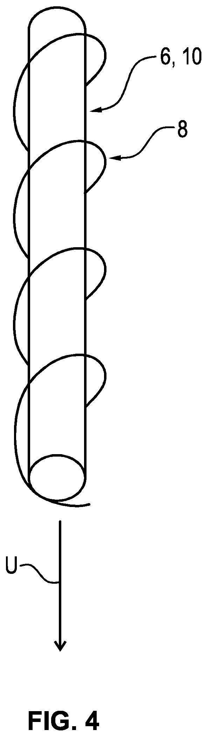

Eine weitere vorteilhafte Ausgestaltung einer Form für die Antenne 8 ist schematisch in Figur 4 dargestellt. Hierbei ist die Antenne 8 in einer schraubenförmigen und/oder wendelförmigen Ausgestaltung dargestellt. Die Antenne 8 ist dabei um einen Strang des Cord 10 gewendelt angeordnet, ohne den Cord 10 zu berühren.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste (Teil der Beschreibung)

- A: Antennenlänge
- K: Abstand
- Q: Querrichtung
- U: Umfangsrichtung

- 2: Riemen
- 4: Basismaterial
- 6: Festigkeitsträger
- 8: Antenne
- 10: Cord
- 12: Oberfläche
- 14: Wechselfeld
- 16: Vorrichtung
- 18: Transmittereinheit
- 20: Auswerteeinheit
- 22: System
- 24: Riemenscheibe
- 26: Riemenscheibe
- 28: Trum
- 30: Riementrieb
- 32: Signalverbindungsleitung
- 34: Zugtrum
- 36: Umschlingungsbereich
- 38: Umschlingungsbereich

## Patentansprüche

1. Riemen (2), aufweisend:
ein Basismaterial (4), insbesondere zumindest teilweise aus Gummimaterial oder Polyurethanmaterial,
einen Festigkeitsträger (6) und
eine, vorzugsweise drahtförmige, Antenne (8),
wobei der Riemen (2) in einer Umfangsrichtung (U) ringförmig umlaufend ausgebildet ist,
wobei der Festigkeitsträger (6) als ein durchgängiger, schraubenförmig gewendelter Cord (10) in das Basismaterial (4) eingebettet ist,
wobei die Antenne (8), vorzugsweise in einer in Umfangsrichtung (U) des Riemens (2) gestreckten Form, in das Basismaterial (4) eingebettet ist, so dass eine unmittelbare stoffschlüssige Verbindung zwischen der gesamten Oberfläche (12) der Antenne (8) und dem Basismaterial (4) besteht,
wobei die Verbindung zwischen der Antenne (8) und dem Basismaterial (4) derart ausgebildet ist, dass eine Dehnung des Riemens (2) in Umfangsrichtung (U) zu einer Längsdehnung der Antenne (8) führt,
wobei die Antenne (8) zur Einkopplung in ein elektromagnetisches Wechselfeld (14) ausgebildet ist, so dass eine elektromagnetische Welle in der Antenne (8) mit einer Resonanzfrequenz entsteht,
wobei die Antenne (8) derart ausgebildet ist, dass die Resonanzfrequenz von einer Länge der Antenne (8) abhängt, und
wobei die Antenne (8) zur Veränderung des Wechselfelds (14) ausgebildet ist, so dass die Veränderung des Wechselfelds (14) eine Längsdehnung der Antenne (8) repräsentiert.

2. Riemen (2) nach dem vorhergehenden Anspruch, **dadurch gekennzeichnet, dass** Gewebelagen in das Basismaterial (4) eingebettet sind.

3. Riemen (2) nach einem der vorhergehenden Ansprüche, **dadurch gekennzeichnet, dass** die Antenne (8) als rein passive Antenne (8) ausgebildet ist.

4. Riemen (2) nach einem der vorhergehenden Ansprüche, **dadurch gekennzeichnet, dass** die Antenne (8) durch einen Metalldraht ausgebildet ist.

5. Riemen (2) nach einem der vorhergehenden Ansprüche 1 bis 2, **dadurch gekennzeichnet, dass** die Antenne (8) als eine gedruckte, elektrisch leitfähige Leitung ausgebildet ist.

6. Riemen (2) nach einem der vorhergehenden Ansprüche 1 bis 2, **dadurch gekennzeichnet, dass** die Antenne (8) von einem elektrisch leitfähigen Gummistrang oder von einem elektrisch leitfähigen Polyurethanstrang gebildet ist.

7. Riemen (2) nach einem der vorhergehenden Ansprüche, **dadurch gekennzeichnet, dass** die Antenne (8) kontaktfrei zu dem Festigkeitsträger (6) angeordnet ist.

8. Riemen (2) nach einem der vorhergehenden Ansprüche, **dadurch gekennzeichnet, dass** der Riemen (2) frei von aktiven elektrischen Bauteilen ausgebildet ist.

9. Vorrichtung (16), aufweisend: einen Transmitter (18), und eine Auswerteeinheit (20), die mit dem Transmitter kombiniert ausgebildet sein kann,
wobei der Transmitter (18) zum Erzeugen eines Wechselfelds (14) ausgebildet ist, in das eine Antenne (8) einkoppelbar ist, was eine elektromagnetische Welle in der Antenne (8) mit einer Resonanzfrequenz, die von einer Länge der Antenne (8) abhängt, und eine Veränderung des Wechselfelds (14) derart bewirkt, so dass die Veränderung des Wechselfelds (14) eine Längsdehnung der Antenne (8) repräsentiert,
wobei der Transmitter (18) zur Erfassung der Veränderung des Wechselfelds (14) ausgebildet ist,
wobei die Auswerteeinheit (20) konfiguriert ist, die Längsdehnung der Antenne (8) basierend auf der erfassten Veränderung des Wechselfelds (14), vorzugsweise in einem vorbestimmten Bereich um die Resonanzfrequenz, zu ermitteln, und
wobei die Auswerteeinheit (20) konfiguriert ist, einen Längenwert, der eine Längsdehnung des Riemens (2) repräsentiert, basierend auf der Längsdehnung der Antenne (8) zu ermitteln.

10. Vorrichtung (16) nach Anspruch 9, **dadurch gekennzeichnet, dass** eine Umfangslänge des Riemens (2) von der Auswerteeinheit (20) gespeichert ist, wobei die Auswerteeinheit (20) dazu konfiguriert ist, einen Längsdehnungswert, der eine absolute Längenänderung des Riemens (2) repräsentiert, basierend dem Längenwert und der Umfangslänge zu ermitteln.

11. Vorrichtung (16) nach einem der vorhergehenden Ansprüche 9 bis 10, **dadurch gekennzeichnet, dass** die Auswerteeinheit (20) konfiguriert ist, basierend auf einer Historie ermittelter Längswerte und/oder Längsdehnungswerte eine Restlebensdauer des Riemens (2) zu ermitteln.

12. System (2), aufweisend:
einen Riemen (2) nach einem der vorhergehenden Ansprüche 1 bis 8, und
eine Vorrichtung (16) nach einem der vorhergehenden Ansprüche 9 bis 11.

13. System (2) nach dem vorhergehenden Anspruch, **dadurch gekennzeichnet, dass** das System (2) mindestens zwei Riemenscheiben (24, 26) aufweist, wobei der Riemen (2) die Riemenscheiben (24, 26) zumindest teilweise umschlingt, wobei eine Länge der Antenne (8) kleiner als die kleinste Trumlänge des Riemens (2) ist.

14. System (2) nach dem vorhergehenden Anspruch, **dadurch gekennzeichnet, dass** die Antennenlänge (A) maximal 90%, 80%, 70%, 60% oder 50% der Trumlänge beträgt.

15. System (2) nach einem der vorhergehenden Ansprüche 12 bis 14, **dadurch gekennzeichnet, dass** der Transmitter (18), insbesondere als ein Teil einer kombinierten Transmitter-Auswerteeinheit, und/oder die gesamte Vorrichtung (16) in einem Abstand (K) zwischen 1 mm und 50 cm zu einem Trum (28) des Riemens (2) angeordnet ist.

## Claims

1. Belt (2), comprising:
a base material (4), in particular at least partially of rubber material or polyurethane material,
a reinforcing element (6) and
an antenna (8), preferably in the form of a wire,
the belt (2) being designed as circulating in a circumferential direction (U) in the form of a ring,
the reinforcing element (6) being embedded in the base material (4) as a continuous, helically coiled cord (10),
the antenna (8) being embedded in the base material (4), preferably in a form in which it is made to extend in the circumferential direction (U) of the belt (2), so that there is a direct material bond between the entire surface (12) of the antenna (8) and the base material (4),
the bond between the antenna (8) and the base material (4) being formed in such a way that an elongation of the belt (2) in the circumferential direction (U) leads to a longitudinal elongation of the antenna (8),
the antenna (8) being designed for coupling into an electromagnetic alternating field (14), so that an electromagnetic wave is produced in the antenna (8) with a resonant frequency,
the antenna (8) being designed in such a way that the resonant frequency depends on a length of the antenna (8), and
the antenna (8) being designed to change the alternating field (14), so that the change in the alternating field (14) represents a longitudinal elongation of the antenna (8).

2. Belt (2) according to the preceding claim, **characterized in that** fabric layers are embedded in the base material (4).

3. Belt (2) according to one of the preceding claims, **characterized in that** the antenna (8) is designed as a purely passive antenna (8).

4. Belt (2) according to one of the preceding claims, **characterized in that** the antenna (8) is formed by a metal wire.

5. Belt (2) according to either of the preceding Claims 1 and 2, **characterized in that** the antenna (8) is formed as a printed, electrically conductive line.

6. Belt (2) according to either of the preceding Claims 1 and 2, **characterized in that** the antenna (8) is formed by an electrically conductive rubber strand or by an electrically conductive polyurethane strand.

7. Belt (2) according to one of the preceding claims, **characterized in that** the antenna (8) is arranged free from contact with the reinforcing element (6).

8. Belt (2) according to one of the preceding claims, **characterized in that** the belt (2) is formed free from active electrical components.

9. Device (16), comprising: a transmitter (18) and an evaluation unit (20), which may be combined with the transmitter,
the transmitter (18) being designed for generating an alternating field (14) into which an antenna (8) can be coupled, which induces an electromagnetic wave in the antenna (8) with a resonant frequency which depends on a length of the antenna (8) and induces a change in the alternating field (14) in such a way that the change in the alternating field (14) represents a longitudinal elongation of the antenna (8),
the transmitter (18) being designed for detecting the change in the alternating field (14),
the evaluation unit (20) being configured to determine the longitudinal elongation of the antenna (8) on the basis of the detected change in the alternating field (14), preferably in a predetermined range around the resonant frequency, and
the evaluation unit (20) being configured to determine on the basis of the longitudinal elongation of the antenna (8) a length value which represents a longitudinal elongation of the belt (2).

10. Device (16) according to Claim 9, **characterized in that** a circumferential length of the belt (2) is stored by the evaluation unit (20), the evaluation unit (20) being configured to determine on the basis of the length value and the circumferential length a longitudinal elongation value which represents an absolute change in length of the belt (2).

11. Device (16) according to either of the preceding Claims 9 and 10, **characterized in that** the evaluation unit (20) is configured to determine on the basis of a history of determined longitudinal values and/or longitudinal elongation values a remaining service life of the belt (2).

12. System (2), comprising:
a belt (2) according to one of the preceding Claims 1 to 8, and
a device (16) according to one of the preceding Claims 9 to 11.

13. System (2) according to the preceding claim, **characterized in that** the system (2) has at least two belt pulleys (24, 26), the belt (2) wrapping at least partially around the belt pulleys (24, 26), a length of the antenna (8) being less than the smallest length of a side of the belt (2).

14. System (2) according to the preceding claim, **characterized in that** the maximum antenna length (A) is 90%, 80%, 70%, 60% or 50% of the length of a side.

15. System (2) according to one of the preceding Claims 12 to 14, **characterized in that** the transmitter (18), in particular as part of a combined transmitter/evaluation unit, and/or the entire device (16) is arranged at a distance (K) of between 1 mm and 50 cm from a side (28) of the belt (2).

## Revendications

1. Courroie (2), comprenant :
un matériau de base (4), en particulier constitué au moins partiellement d'un matériau de caoutchouc ou d'un matériau de polyuréthane,
un renfort (6) et
une antenne (8), de préférence sous forme de fil,
la courroie (2) étant conçue de manière à être circonférentiellement annulaire dans une direction circonférentielle (U),
le renfort (6) étant noyé dans le matériau de base (4) sous forme d'un cordon (10) continu enroulé en hélice,
l'antenne (8), de préférence sous une forme étirée dans une direction circonférentielle (U) de la courroie (2), étant noyée dans le matériau de base (4) de telle sorte qu'il existe une liaison par complémentarité de matériau directe entre la totalité de la surface (12) de l'antenne (8) et le matériau de base (4),
la liaison entre l'antenne (8) et le matériau de base (4) étant réalisée de telle sorte qu'une dilatation de la courroie (2) dans la direction circonférentielle (U) entraîne une dilatation longitudinale de l'antenne (8),
l'antenne (8) étant conçue pour le couplage dans un champ alternatif électromagnétique (14), de sorte qu'une onde électromagnétique est générée dans l'antenne (8) à une fréquence de résonance,
l'antenne (8) étant conçue de telle sorte que la fréquence de résonance dépend d'une longueur de l'antenne (8), et
l'antenne (8) étant conçue pour modifier le champ alternatif (14) de telle sorte que la modification du champ alternatif (14) représente une dilatation longitudinale de l'antenne (8).

2. Courroie (2) selon la revendication précédente, **caractérisée en ce que** des couches de tissu sont noyées dans le matériau de base (4).

3. Courroie (2) selon l'une quelconque des revendications précédentes, **caractérisée en ce que** l'antenne (8) est conçue sous forme d'antenne purement passive (8).

4. Courroie (2) selon l'une quelconque des revendications précédentes, **caractérisée en ce que** l'antenne (8) est constituée d'un fil métallique.

5. Courroie (2) selon l'une quelconque des revendications 1 à 2, **caractérisée en ce que** l'antenne (8) est conçue sous la forme d'une ligne électriquement conductrice imprimée.

6. Courroie (2) selon l'une quelconque des revendications 1 à 2, **caractérisée en ce que** l'antenne (8) est formée d'un cordon en caoutchouc électriquement conducteur ou d'un cordon en polyuréthane électriquement conducteur.

7. Courroie (2) selon l'une quelconque des revendications précédentes, **caractérisée en ce que** l'antenne (8) est disposée sans être contact avec le renfort (6).

8. Courroie (2) selon l'une quelconque des revendications précédentes, **caractérisée en ce que** la courroie (2) est exempte de composants électriques actifs.

9. Dispositif (16), comprenant : un émetteur (18) et une unité d'évaluation (20) qui peut être réalisée de manière combinée à l'émetteur,
l'émetteur (18) étant conçu pour générer un champ alternatif (14) dans lequel une antenne (8) peut être couplée, ce qui provoque une onde électromagnétique dans l'antenne (8) à une fréquence de résonance qui dépend d'une longueur de l'antenne (8), et une modification du champ alternatif (14) de telle sorte que la modification du champ alternatif (14) représente une dilatation longitudinale de l'antenne (8),
l'émetteur (18) étant conçu pour détecter la modification du champ alternatif (14), l'unité d'évaluation (20) étant configurée pour déterminer la dilatation longitudinale de l'antenne (8) sur la base de la modification détectée du champ alternatif (14), de préférence dans une plage prédéterminée au voisinage de la fréquence de résonance, et
l'unité d'évaluation (20) étant configurée pour déterminer une valeur de longueur qui représente une dilatation longitudinale de la courroie (2) sur la base de la dilatation longitudinale de l'antenne (8).

10. Dispositif (16) selon la revendication 9, **caractérisé en ce qu'**une longueur circonférentielle de la courroie (2) est mémorisée par l'unité d'évaluation (20), l'unité d'évaluation (20) étant configurée pour déterminer une valeur de dilatation longitudinale qui représente un changement de longueur absolu de la courroie (2), sur la base de la valeur de longueur et de la longueur circonférentielle.

11. Dispositif (16) selon l'une quelconque des revendications 9 à 10, **caractérisé en ce que** l'unité d'évaluation (20) est configurée pour déterminer une durée de vie restante de la courroie (2) sur la base d'un historique des valeurs de longueur et/ou des valeurs de dilatation longitudinale déterminées.

12. Système(2), comprenant :
une courroie (2) selon l'une quelconque des revendications 1 à 8, et
un dispositif (16) selon l'une quelconque des revendications 9 à 11.

13. Système (2) selon la revendication précédente, **caractérisé en ce que** le système (2) comprend au moins deux poulies (24, 26), la courroie (2) s'enroulant au moins partiellement sur les poulies (24, 26), une longueur de l'antenne (8) étant inférieure à la plus petite longueur de brin de la courroie (2).

14. Système (2) selon la revendication précédente, **caractérisé en ce que** la longueur d'antenne (A) est au maximum de 90%, 80%, 70%, 60% ou 50% de la longueur de brin.

15. Système (2) selon l'une quelconque des revendications 12 à 14, **caractérisé en ce que** l'émetteur (18), en particulier en tant que partie d'une unité d'évaluation-émetteur combinée, et/ou le dispositif entier (16) est disposé à une distance (K) comprise entre 1 mm et 50 cm d'un brin (28) de la courroie (2).
